# EUROPÄISCHE PATENTANMELDUNG

(11) **EP 4 280 451 A1**
(43) Veröffentlichungstag der Anmeldung: **22.11.2023**
(21) Anmeldenummer: 22174589.6
(22) Anmeldetag: 20.05.2022
(51) Int. Cl.: H02P 6/16, G01D 5/245

(54) **GEBEREINRICHTUNG MIT VERBESSERTER KOMMUNIKATION**

(71) Anmelder: Siemens Aktiengesellschaft, 80333 München (DE)
(72) Erfinder: Gutzmer, Marcus, 30827 Garbsen (DE); Krause, Uwe, 30982 Pattensen (DE); Nolte, Uwe, 30890 Barsinghausen (DE)
(74) Vertreter: Siemens Patent Attorneys

(57) **Zusammenfassung**

Eine Gebereinrichtung (8) eines rotatorischen elektrischen Antriebs (1), der einen Stator (2) und einen relativ zum Stator (2) drehbar gelagerten Rotor (3) aufweist, übermittelt in einem Normalbetrieb beim Drehen des Rotors (3) über eine erste Signalleitung (9a) einen ersten binären Signalverlauf (Sa), über eine zweite Signalleitung (9b) einen zweiten binären Signalverlauf (Sb) und über eine dritte Signalleitung (9c) einen dritten binären Signalverlauf (Sc) an eine Steuereinrichtung (5) des Antriebs (1). Im Normalbetrieb der Gebereinrichtung (8) weisen der erste und der zweite binäre Signalverlauf (Sa, Sb) über eine Drehung des Rotors (3) um 360° gesehen eine Anzahl an ersten Perioden auf, sind gleichartig und sind um einen ersten Phasenversatz (δt1) gegeneinander phasenversetzt, der kleiner als die Hälfte der ersten Periode ist. Dadurch sind von der Steuereinrichtung (5) anhand des übermittelten ersten und zweiten binären Signalverlaufs (Sa, Sb) die Lage und/oder die Drehzahl des Rotors (3) ermittelbar. Der dritte binäre Signalverlauf (Sc) weist eine zweite Periode auf, die ein ganzzahliges Vielfaches der ersten Periode ist. In einem Sonderbetrieb übermittelt die Gebereinrichtung (8) über die dritte Signalleitung (9c) von der aktuellen Lage und der aktuellen Drehzahl des Rotors (3) unabhängige, in der Gebereinrichtung (8) gespeicherte Daten (D) an die Steuereinrichtung (5).

## Beschreibung

Die vorliegende Erfindung geht aus von einem Betriebsverfahren für eine Gebereinrichtung eines rotatorischen elektrischen Antriebs, der einen Stator und einen relativ zum Stator drehbar gelagerten Rotor aufweist,
- wobei die Gebereinrichtung in einem Normalbetrieb der Gebereinrichtung beim Drehen des Rotors über eine erste Signalleitung einen ersten binären Signalverlauf und über eine zweite Signalleitung einen zweiten binären Signalverlauf an eine Steuereinrichtung des Antriebs übermittelt,
- wobei im Normalbetrieb der Gebereinrichtung der erste und der zweite binäre Signalverlauf über eine Drehung des Rotors um 360° gesehen eine Anzahl an ersten Perioden aufweisen, gleichartig sind und um einen ersten Phasenversatz gegeneinander phasenversetzt sind, der kleiner als die Hälfte der ersten Periode ist, so dass von der Steuereinrichtung anhand des übermittelten ersten und zweiten binären Signalverlaufs die Lage und/oder die Drehzahl des Rotors ermittelbar sind,
- wobei die Gebereinrichtung im Normalbetrieb der Gebereinrichtung beim Drehen des Rotors über eine dritte Signalleitung einen dritten binären Signalverlauf an die Steuereinrichtung übermittelt,
- wobei der dritte binäre Signalverlauf eine zweite Periode aufweist,
- wobei die zweite Periode ein ganzzahliges Vielfaches der ersten Periode ist.

Die vorliegende Erfindung geht weiterhin aus von einer Gebereinrichtung, die derart ausgebildet oder programmiert ist, dass sie im Betrieb ein derartiges Betriebsverfahren ausführt.

Derartige Betriebsverfahren und die zugehörigen Gebereinrichtungen sind allgemein bekannt.

Für den Betrieb eines rotatorischen elektrischen Antriebs mit einer Lage- oder Drehzahlregelung wird üblicherweise eine Gebereinrichtung verwendet, mittels derer die Lage des Rotors des elektrischen Antriebs erfasst werden kann. Im Falle einer Lageregelung wird die Lage des Rotors als solche verwendet. Sofern - alternativ oder zusätzlich zur Lage - die Drehzahl des Rotors benötigt wird, kann die Drehzahl (in der Regel nach Betrag und Vorzeichen) durch zeitliche Ableitung der Lage des Rotors ermittelt werden.

Damit die Lage- oder Drehzahlregelung stabil arbeitet, muss die Steuereinrichtung, welche die Steuersignale für den rotatorischen elektrischen Antrieb generiert, entsprechend parametriert sein. Die Parametrierung kann auf verschiedene Art und Weise erfolgen.

Im einfachsten Fall wird die Parametrierung der Steuereinrichtung über eine entsprechende Benutzeroberfläche von einer Bedienperson vorgegeben. Die Bedienperson kann beispielsweise Kenndaten der Gebereinrichtung als solcher, Kenndaten des Antriebs als solchem und Kenndaten einer von dem Antrieb angetriebenen Last eingeben. Diese Vorgehensweise ist jedoch fehleranfällig.

Im Stand der Technik ist bereits bekannt, Kenndaten der Gebereinrichtung als solcher und gegebenenfalls auch Kenndaten des Antriebs als solchem in der Gebereinrichtung zu hinterlegen und die Kenndaten - beispielsweise im Rahmen einer Inbetriebnahme des Antriebs - über eine Kommunikationsschnittstelle an die Steuereinrichtung zu übermitteln. Dadurch kann eine korrekte Parametrierung der Steuereinrichtung gewährleistet werden. Weiterhin ist diese Vorgehensweise sehr komfortabel - Stichwort "Plug and Play".

Zur Implementierung der Kommunikationsschnittstelle sind mehrere Realisierungen bekannt.

So ist beispielsweise bekannt, an der Gebereinrichtung eine Ethernet-Schnittstelle vorzusehen, über welche die Kommunikation mit der Steuereinrichtung erfolgt. Die Implementierung einer Ethernet-Schnittstelle ist jedoch relativ aufwendig und daher unter Kostengesichtspunkten von Nachteil.

Bei den meisten Gebereinrichtungen ist die zweite Periode größer als die erste Periode und ist weiterhin die erste Periode 360°/n, wobei n eine natürliche Zahl größer als 1 ist. Bei derartigen Gebereinrichtungen ist bekannt, dass die Gebereinrichtung in einem Sonderbetrieb der Gebereinrichtung über die erste Signalleitung (alternativ die zweite Signalleitung) von der aktuellen Lage und der aktuellen Drehzahl des Rotors unabhängige, in der Gebereinrichtung gespeicherte Daten an die Steuereinrichtung übermittelt. Diese Lösung ist relativ kostengünstig, jedoch nur in begrenztem Umfang verwendbar.

Insbesondere werden bei der zuletzt erläuterten Lösung der Beginn und das Ende einer Datenübertragung dadurch signalisiert, dass die Gebereinrichtung die Übermittlung eines Wechsels des Pegels des ersten Signalverlaufs zeitlich vorzieht. Dadurch ist der zeitliche Abstand zum vorhergehenden Wechsel des Pegels des ersten oder des zweiten Signalverlaufs kleiner als ein erwarteter zeitlicher Abstand, der aufgrund der Drehzahl des Rotors von der Steuereinrichtung erwartet wird. Die Steuereinrichtung kann dadurch den Beginn und das Ende einer Datenübertragung erkennen. Die zuletzt erläuterte Lösung ist jedoch nur dann verwendbar, wenn zuverlässig gewährleistet werden kann, dass die Drehzahl des elektrischen Antriebs (genauer: deren Betrag) unterhalb einer vorbestimmten Grenzdrehzahl liegt. Denn nur dann kann eine Signalisierung des Beginns und des Endes einer Datenübertragung von der Steuereinrichtung zuverlässig von einem normalen Wechsel des Pegels des ersten Signalverlaufs aufgrund der Drehung des Rotors unterschieden werden.

Auch andere Lösungen sind bekannt, siehe beispielsweise https://www.samsongroup.com/de/service-support/elektronisches-typenschild und https://www.br-automation.com/downloads_br_productcatalogue/assets/1604846178110-de-original-1.0.pdf oder auch die DIN SPEC 91406:2019-12. Diese Lösungen arbeiten auf unterschiedliche Art und Weise, beispielsweise mittels QR-Code oder eindeutiger Identifikationscodes oder RFID-Tags.

Die Aufgabe der vorliegenden Erfindung besteht darin, Möglichkeiten zu schaffen, mittels derer auf einfache und kostengünstige Art und Weise eine zuverlässige Datenübertragung zumindest von der Gebereinrichtung zur Steuereinrichtung realisierbar ist.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 11.

Erfindungsgemäß wird ein Betriebsverfahren der eingangs genannten Art dadurch ausgestaltet, dass die Gebereinrichtung in einem Sonderbetrieb der Gebereinrichtung über die dritte Signalleitung von der aktuellen Lage und der aktuellen Drehzahl des Rotors unabhängige, in der Gebereinrichtung gespeicherte Daten an die Steuereinrichtung übermittelt.

Es wird also vom Ansatz her eine ähnliche Lösung wie im Stand der Technik ergriffen. Der entscheidende Unterschied ist jedoch, dass für die Datenübertragung die dritte Signalleitung genutzt wird, bei welcher die Periode des entsprechenden Signalverlaufs (also des dritten Signalverlaufs) größer oder zumindest nicht kleiner als die Periode des ersten und der zweiten Signalverlaufs ist.

Der Normalbetrieb wird durch diese Vorgehensweise nicht beeinflusst. Der Normalbetrieb erfolgt daher auf die gleiche Art und Weise, wie sie auch im Stand der Technik für eine derartige Gebereinrichtung bekannt ist.

In vielen Fällen ist die zweite Periode größer als die erste Periode und ist weiterhin die erste Periode 360°/n, wobei n eine ganze Zahl größer als 1 ist. In diesem Fall werden oftmals der erste Signalverlauf als A-Signal und der zweite Signalverlauf als B-Signal bezeichnet. n weist oftmals einen großen Wert auf, insbesondere einen Wert von 100 und mehr, manchmal sogar von über 1000. Der Phasenversatz zwischen dem ersten und zweiten binären Signalverlaufs liegt in der Regel in etwa bei einem Viertel der ersten Periode. Der Phasenversatz liegt also, bezogen auf die erste Periode, bei in etwa 90°. n kann insbesondere die Strichzahl einer mit dem Rotor drehfest verbundenen Geberscheibe der Gebereinrichtung sein.

Unabhängig von sonstigen Ausgestaltungen des Betriebsverfahrens wechselt der dritte Signalverlauf bei dieser Ausgestaltung somit seltener - meist sogar erheblich seltener - seinen Signalpegel als der erste und der zweite Signalverlauf. Sogar dann, wenn die übrige Vorgehensweise des Standes der Technik beibehalten wird (also insbesondere das Kennzeichnen des Beginns und des Endes einer Datenübertragung durch das Vorziehen des Wechsels des Pegels des übermittelten Signalverlaufs erfolgt), ist somit auch bei (betragsmäßig) sehr hohen Drehzahlen des Rotors auf Seiten der Steuereinrichtung eine zuverlässige Unterscheidung von einer "normalen" Übermittlung eines Pegelwechsels und einer Markierung des Anfangs bzw. des Endes einer Datenübertragung möglich.

Der dritte Signalverlauf weist üblicherweise pro 360° nur zwei Pegelwechsel (je einmal von 0 auf 1 und von 1 auf 0) auf. Es handelt sich somit um einen Synchronisationspuls, der pro 360° nur ein einziges Mal übertragen wird. Insbesondere bei einem derartigen Synchronpuls ist die Unterscheidung zwischen einer "normalen" Übermittlung eines Pegelwechsels und einer Markierung des Anfangs bzw. des Endes einer Datenübertragung besonders zuverlässig möglich. Im Falle eines Synchronisationspulses wird der dritte Signalverlauf oftmals als Z-Signal bezeichnet. Auch die Bezeichnungen I-Signal oder 0-Signal sind bekannt.

Die über die erste und die zweite Signalleitung übertragenen Signalverläufe werden für die Datenübertragung nicht benötigt. Es ist daher möglich, dass die Gebereinrichtung im Sonderbetrieb der Gebereinrichtung über die erste und die zweite Signalleitung ebenso wie im Normalbetrieb den ersten und den zweiten binären Signalverlauf an die Steuereinrichtung übermittelt. Dadurch steht der Steuereinrichtung trotz der Datenübertragung über die dritte Signalleitung jederzeit und insbesondere praktisch verzögerungsfrei die vollständige Information über die Lage und/oder die Drehzahl des Rotors zur Verfügung. Denn der dritte Signalverlauf ist eigentlich redundant bzw. wird nur einmalig zu Beginn für eine Synchronisation benötigt. Insbesondere die Beibehaltung der Übertragung des ersten und des zweiten Signalverlaufs über die erste und die zweite Signalleitung stellt einen Vorteil gegenüber einer Übertragung der entsprechenden Signalverläufe über eine Kommunikationsschnittstelle dar.

Wie bereits erwähnt, ist es möglich, dass die Gebereinrichtung im Sonderbetrieb der Gebereinrichtung über die dritte Signalleitung weiterhin den dritten binären Signalverlauf an die Steuereinrichtung übermittelt und die Übermittlung der Daten in den Pausen zwischen aufeinanderfolgenden Pegelwechseln des dritten binären Signalverlaufs erfolgt. Alternativ ist es möglich, dass die Gebereinrichtung im Sonderbetrieb der Gebereinrichtung über die dritte Signalleitung ausschließlich die Daten übermittelt, nicht aber den dritten Signalverlauf als solchen. Meist ist die letztgenannte Ausgestaltung vorzuziehen. Die erstgenannte Ausgestaltung ist aber durchaus ebenfalls realisierbar.

In einer alternativen Ausgestaltung des Betriebsverfahrens ist die zweite Periode gleich der ersten Periode. In diesem Fall ist insbesondere die erste Periode 360°/p, wobei p eine ganze Zahl ist. In diesem Fall ist weiterhin der dritte binäre Signalverlauf gegenüber dem ersten binären Signalverlauf um einen zweiten Phasenversatz phasenversetzt, der kleiner als die Hälfte der ersten Periode ist und vom ersten Phasenversatz verschieden ist. Meist liegt der erste Phasenversatz in etwa bei einem Sechstel der ersten Periode und liegt weiterhin der zweite Phasenversatz in etwa bei einem Drittel der ersten Periode. Der Phasenversatz zwischen den ersten und zweiten Signalverläufen sowie zwischen den zweiten und den dritten Signalverläufen liegt also in der Regel, bezogen auf die erste Periode, jeweils bei in etwa 60°.

Die ersten, zweiten und dritten Signalverläufe entsprechen in diesem Fall den Signalverläufen, wie sie von geeignet angeordneten Hallsensoren abgegeben werden. Sie können verwendet werden, wenn die Lage bzw. Drehzahl des Rotors nur in etwa bekannt sein muss.

p kann insbesondere die Polpaarzahl des rotatorischen elektrischen Antriebs sein. Die Polpaarzahl kann prinzipiell einen beliebigen Wert aufweisen. Insbesondere kann sie den Wert 1, den Wert 2, den Wert 4 oder auch größere Werte aufweisen.

In dem Fall, dass die zweite Periode gleich der ersten Periode ist, sind im Sonderbetrieb der Gebereinrichtung für die Betriebsweise der ersten und der zweiten Signalleitung verschiedene Vorgehensweisen möglich.

So ist es beispielsweise möglich, dass die Gebereinrichtung im Sonderbetrieb der Gebereinrichtung über die erste und die zweite Signalleitung ebenso wie im Normalbetrieb den ersten und den zweiten binären Signalverlauf an die Steuereinrichtung übermittelt. Dadurch ist trotz der Übermittlung der Daten über die dritte Signalleitung auch im Sonderbetrieb der Gebereinrichtung - wenn auch mit etwas verringerter Genauigkeit - weiterhin anhand der über die erste und die zweite Signalleitung übermittelten binären Signalverläufe die Lage und/oder die Drehzahl des Rotors ermittelbar.

Alternativ ist es möglich, dass die Gebereinrichtung im Sonderbetrieb der Gebereinrichtung über die erste und/oder die zweite Signalleitung anstelle des ersten und/oder zweiten binären Signalverlaufs weitere von der aktuellen Lage und der aktuellen Drehzahl des Rotors unabhängige, in der Gebereinrichtung gespeicherte Daten an die Steuereinrichtung übermittelt. In diesem Fall können somit zwei oder sogar alle drei Signalleitungen zur Übermittlung von Daten von der Gebereinrichtung zur Steuereinrichtung genutzt werden.

Alternativ ist es möglich, dass die Gebereinrichtung im Sonderbetrieb der Gebereinrichtung über die erste und/oder die zweite Signalleitung den ersten und/oder den zweiten binären Signalverlauf nicht an die Steuereinrichtung übermittelt, aber von der Steuereinrichtung gesendete Daten und/oder Befehle entgegennimmt. Dadurch kann umgekehrt auch eine Übermittlung von Informationen von der Steuereinrichtung an die Gebereinrichtung realisiert werden.

Alternativ ist es möglich, dass die Gebereinrichtung im Sonderbetrieb der Gebereinrichtung über die erste und die zweite Signalleitung weder Signalverläufe noch Daten an die Steuereinrichtung übermittelt noch von der Steuereinrichtung gesendete Daten und/oder Befehle entgegennimmt. In diesem Fall wird im Sonderbetrieb ausschließlich die dritte Signalleitung aktiv genutzt.

Analog zu der Ausgestaltung, bei welcher die zweite Periode größer als die erste Periode ist, ist es auch in dem Fall, dass die zweite Periode gleich der ersten Periode ist, möglich, dass die Gebereinrichtung im Sonderbetrieb der Gebereinrichtung über die dritte Signalleitung weiterhin den dritten binären Signalverlauf an die Steuereinrichtung übermittelt, wobei die Übermittlung der Daten in den Pausen zwischen aufeinanderfolgenden Pegelwechseln des dritten binären Signalverlaufs erfolgt. Alternativ ist es natürlich auch möglich, dass die Gebereinrichtung im Sonderbetrieb der Gebereinrichtung über die dritte Signalleitung ausschließlich die Daten übermittelt, nicht aber den dritten binären Signalverlauf als solchen.

Es ist möglich, dass aufgrund der Ausgestaltung der Gebereinrichtung festgelegt ist, ob die zweite Periode größer als die erste Periode ist oder die zweite Periode gleich der ersten Periode ist. Vorzugsweise entscheidet die Gebereinrichtung jedoch anhand einer in der Gebereinrichtung hinterlegten Parametrierung der Gebereinrichtung, ob sie die Gebereinrichtung im Normalbetrieb auf die eine oder die andere Art und Weise betreibt. Dadurch ist die Gebereinrichtung universeller verwendbar.

Die Gebereinrichtung muss - zumindest ab und zu - zwischen dem Normalbetrieb und dem Sonderbetrieb umschaltbar sein. Zu diesem Zweck sind verschiedene Vorgehensweisen möglich.

Eine Möglichkeit besteht darin, dass die Gebereinrichtung von der Steuereinrichtung über Versorgungsleitungen eine elektrische Versorgungsspannung entgegennimmt und die Gebereinrichtung in Abhängigkeit von über die Versorgungsleitungen übermittelten Befehlen entscheidet, ob sie den Normalbetrieb oder den Sonderbetrieb annimmt. In diesem Fall ist es möglich, die dritte Signalleitung ausschließlich unidirektional zu nutzen, also im Normalbetrieb zur Übermittlung des dritten Signalverlaufs von der Gebereinrichtung zur Steuereinrichtung und im Sonderbetrieb - gegebenenfalls zusätzlich zur Übermittlung des dritten Signalverlaufs - zur Datenübertragung von der Gebereinrichtung zur Steuereinrichtung.

Eine weitere Möglichkeit besteht darin, dass die Gebereinrichtung in Abhängigkeit von von der Steuereinrichtung über eine der Signalleitungen übermittelten Befehlen entscheidet, ob sie den Normalbetrieb oder den Sonderbetrieb annimmt. In diesem Fall erfolgt eine bidirektionale Nutzung der dritten Signalleitung.

Eine weitere Möglichkeit besteht darin, dass die Gebereinrichtung beim Einschalten zunächst stets den Sonderbetrieb annimmt. In diesem Fall muss lediglich zum Beenden des Sonderbetriebs ein einmaliges Umschalten erfolgen. Das Umschalten kann beispielsweise von der Steuereinrichtung initiiert werden oder automatisch erfolgen, sobald die Daten vollständig an die Steuereinrichtung übermittelt sind. Bevorzugt ist jedoch, dass die Gebereinrichtung beim Einschalten zunächst stets den Normalbetrieb annimmt. Denn dadurch ist die Gebereinrichtung auch in Verbindung mit einer Steuereinrichtung verwendbar, welche ausschließlich in der Lage ist, über die dritte Signalleitung den dritten Signalverlauf entgegenzunehmen, nicht aber die Daten.

Die Aufgabe wird weiterhin durch eine Gebereinrichtung mit den Merkmalen des Anspruchs 12 gelöst. Erfindungsgemäß ist eine Gebereinrichtung derart ausgebildet oder programmiert, dass sie im Betrieb ein erfindungsgemäßes Betriebsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Antriebssystem,
- FIG 2 bis 8: Signalverläufe als Funktion der Zeit,
- FIG 9: ein Ablaufdiagramm und
- FIG 10: einen Spannungsverlauf als Funktion der Zeit.

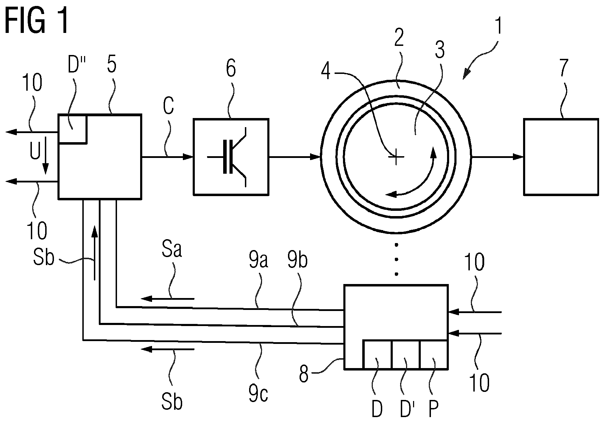

Gemäß FIG 1 weist ein rotatorischer elektrischer Antrieb 1 einen Stator 2 und einen Rotor 3 auf. Der Rotor 3 ist, wie in FIG 1 durch einen Doppelpfeil angedeutet ist, im Stator 2 um eine Drehachse 4 drehbar gelagert. Der elektrische Antrieb 1 wird von einer Steuereinrichtung 5 gesteuert. Die Steuereinrichtung 5 ermittelt zu diesem Zweck Steuersignale C, die sie an einen Stromrichter 6 übermittelt, über welchen der elektrische Antrieb 1 mit elektrischer Energie versorgt wird. Entsprechend der Versorgung mit elektrischer Energie treibt der elektrische Antrieb 1 eine Last 7 an. Die Last 7 kann beliebiger Natur sein, beispielsweise Arbeitswalzen eines Walzgerüsts, Antriebsräder eines Fahrzeugs, ein Aufzug, ein Förderband und andere mehr.

Im Rahmen der Ermittlung der Steuersignale C berücksichtigt die Steuereinrichtung 5 eine Lage des Rotors 3 und/oder eine Drehzahl des Rotors 3 (letztere oftmals sowohl nach Betrag als auch nach Vorzeichen). Beispielsweise kann die Steuereinrichtung eine Lageregelung oder eine Drehzahlregelung des Antriebs 1 implementieren. Alternativ ist es möglich, dass unabhängig von der Art der Regelung - beispielsweise auch bei einer Momentregelung - zur Ermittlung der korrekten Ansteuerung des Antriebs 1 die Lage des Rotors 3 bekannt sein muss. Zur Erfassung der Lage und/oder der Drehzahl des Rotors 3 weist der Antrieb 1 daher eine Gebereinrichtung 8 auf. Die Gebereinrichtung 8 ist mit der Steuereinrichtung 5 zumindest über eine erste Signalleitung 9a, eine zweite Signalleitung 9b und eine dritte Signalleitung 9c verbunden.

Nachstehend wird der Betrieb der Gebereinrichtung 8 näher erläutert. Die Gebereinrichtung 8 ist demzufolge derart ausgebildet oder programmiert, dass sie diesen Betrieb implementiert.

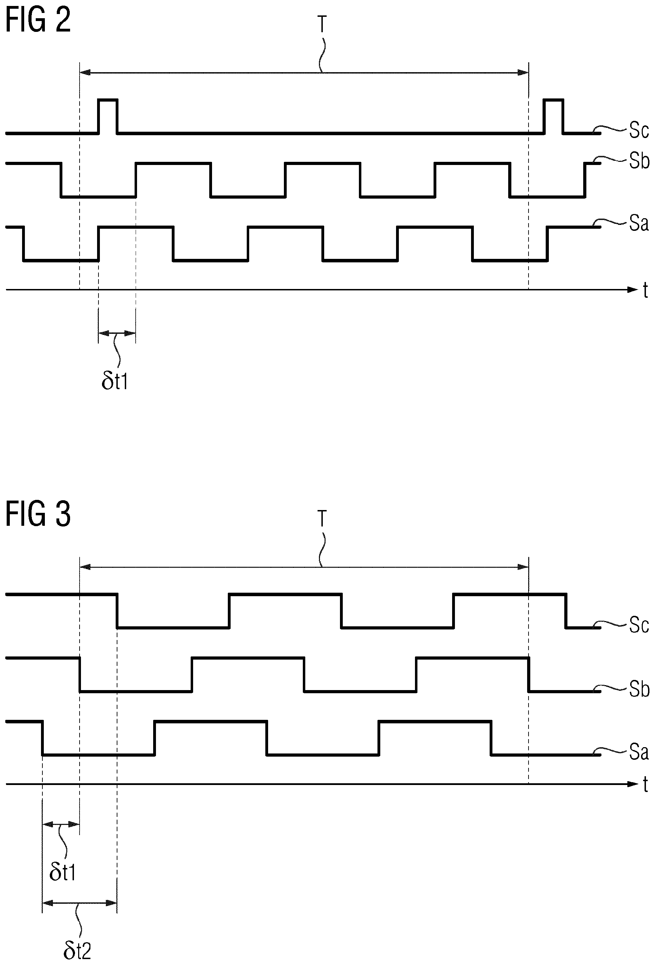

In einem Normalbetrieb der Gebereinrichtung 7 übermittelt die Gebereinrichtung 8 beim Drehen des Rotors 3 über die erste Signalleitung 9a einen ersten binären Signalverlauf Sa, über die zweite Signalleitung 9b einen zweiten binären Signalverlauf Sb und über die dritte Signalleitung 9c einen dritten binären Signalverlauf Sc an die Steuereinrichtung 5. Nachfolgend werden in Verbindung mit den FIG 2 und 3 für den Normalbetrieb der Gebereinrichtung 8 zwei typische mögliche Ausgestaltungen der binären Signalverläufe Sa bis Sc als Funktion der Zeit t erläutert. Hierbei wird angenommen, dass der Rotor 3 sich mit einer konstanten Drehzahl dreht, so dass er während einer vorbestimmten Zeitspanne T genau eine Drehung um 360° um seine Drehachse 4 ausführt. Das Drehen des Rotors 3 mit konstanter Drehzahl ist jedoch nicht zwingend erforderlich. Es wird lediglich angenommen, um die Erfindung einfacher erläutern zu können.

Gemäß FIG 2 weist der erste Signalverlauf Sa während der Zeitspanne T eine Anzahl n an ersten Perioden auf, wobei n eine ganze Zahl ist. Während jeder einzelnen Periode wechselt der Pegel des ersten Signalverlaufs Sa genau einmal von 0 auf 1 und genau einmal von 1 auf 0. Die Pegelwechsel sind in der Regel in etwa äquidistant. Ein Pegelwechsel von 0 auf 1 liegt somit in etwa in der Mitte zwischen den angrenzenden Pegelwechseln von 1 auf 0, ein Pegelwechsel von 1 auf 0 in etwa in der Mitte zwischen den angrenzenden Pegelwechseln von 0 auf 1.

Die Anzahl n an ersten Perioden ist größer als 1, beträgt also mindestens 2. Somit treten entsprechend der Darstellung in FIG 2 während der Zeitspanne T mehrere erste Perioden auf. Konkret sind in FIG 2 genau drei erste Perioden dargestellt. In der Regel ist die Anzahl n an ersten Perioden jedoch erheblich größer. Typischerweise ist die Anzahl n an ersten Perioden gleich der sogenannten Strichzahl einer Geberscheibe (nicht dargestellt), die mit dem Rotor 3 drehfest verbunden ist und von der Gebereinrichtung 8 optisch, magnetisch oder auf andere Weise abgetastet wird. Die Strichzahl einer Geberscheibe liegt meist im Bereich von 100 und darüber, oftmals sogar im Bereich von 1000 und darüber.

Gemäß FIG 2 ist der zweite binäre Signalverlauf Sb gleichartig zum ersten binären Signalverlauf Sa. Er weist insbesondere die gleiche Anzahl n an ersten Perioden auf wie der erste binäre Signalverlauf Sa, wobei während jeder einzelnen ersten Periode der Pegel des zweiten Signalverlaufs Sb genau einmal von 0 auf 1 und genau einmal von 1 auf 0 wechselt und die Pegelwechsel in etwa äquidistant aufeinander folgen. Der zweite binäre Signalverlauf Sb ist jedoch gegenüber dem ersten binären Signalverlauf Sa um einen ersten Phasenversatz δt1 phasenversetzt. Der erste Phasenversatz δt1 ist kleiner als die Hälfte der ersten Periode. Im Rahmen der Ausgestaltung gemäß FIG 2 liegt der erste Phasenversatz δt1 meist im Bereich von etwa einem Viertel der ersten Periode. In jedem Fall ist der erste Phasenversatz δt1 jedoch derart bestimmt, dass zwischen je zwei Pegelwechseln des ersten Signalverlaufs Sa genau ein Pegelwechsel des zweiten Signalverlaufs Sb liegt und damit auch zwischen je zwei Pegelwechseln des zweiten Signalverlaufs Sb genau ein Pegelwechsel des ersten Signalverlaufs Sa liegt.

Der dritte binäre Signalverlauf Sc weist eine zweite Periode auf. Die zweite Periode ist größer als die erste Periode. Insbesondere ist die zweite Periode ein ganzzahliges Vielfaches der ersten Periode. In der Regel weist der dritte binäre Signalverlauf Sc während der Zeitspanne T genau eine einzige Periode auf, wechselt also während der Zeitspanne T genau einmal von 0 auf 1 und genau einmal von 1 auf 0. Meist folgen die beiden Pegelwechsel des dritten Signalverlaufs Sc mit einem geringen Abstand voneinander.

Im Ergebnis kann die Steuereinrichtung 5 somit anhand des ersten und zweiten binären Signalverlaufs Sa, Sb inkremental die Lage und/oder die Drehzahl des Rotors 3 fortschreiben und damit ermitteln. Der dritte binäre Signalverlauf Sc dient lediglich als Synchronisationspuls, anhand dessen jeweils die momentane Drehstellung des Rotors 3 absolut erfasst werden kann.

Ein derartiger Betrieb der Gebereinrichtung 8 ist Fachleuten allgemein bekannt. In diesem Fall arbeitet die Gebereinrichtung 8 als sogenannter Inkrementalgeber. Der erste und der zweite binäre Signalverlauf Sa, Sb werden im Falle eines Inkrementalgebers oftmals als A-Signal und B-Signal bezeichnet, der dritte binäre Signalverlauf Sc beispielsweise als Z-Signal oder I-Signal.

Gemäß FIG 3 weist der erste Signalverlauf Sa während der Zeitspanne T ebenfalls eine Anzahl p an ersten Perioden auf, wobei p eine ganze Zahl ist. Während jeder einzelnen ersten Periode wechselt der Pegel des ersten Signalverlaufs Sa genau einmal von 0 auf 1 und genau einmal von 1 auf 0. Die Pegelwechsel sind in der Regel in etwa äquidistant. Ein Pegelwechsel von 0 auf 1 liegt somit in etwa in der Mitte zwischen den angrenzenden Pegelwechseln von 1 auf 0, ein Pegelwechsel von 1 auf 0 in etwa in der Mitte zwischen den angrenzenden Pegelwechseln von 0 auf 1.

Entsprechend der Darstellung in FIG 3 treten während der Zeitspanne T mehrere erste Perioden auf. Konkret sind in FIG 2 genau zwei erste Perioden dargestellt. Dies ist aber nicht zwingend erforderlich. Minimal muss lediglich eine einzige erste Periode vorhanden sein. Typischerweise ist die Anzahl p an ersten Perioden gleich der sogenannten Polpaarzahl des Antriebs 1.

Analog zu FIG 2 ist auch bei FIG 3 der zweite binäre Signalverlauf Sb gleichartig zum ersten binären Signalverlauf Sa. Er weist also die gleiche Anzahl p an ersten Perioden auf wie der erste binäre Signalverlauf Sa, wobei während jeder einzelnen ersten Periode der Pegel des zweiten Signalverlaufs Sb genau einmal von 0 auf 1 und genau einmal von 1 auf 0 wechselt und die Pegelwechsel in etwa äquidistant aufeinander folgen. Der zweite binäre Signalverlauf Sb ist weiterhin ebenso wie zuvor bei FIG 2 gegenüber dem ersten binären Signalverlauf Sa um einen ersten Phasenversatz δt1 phasenversetzt. Der erste Phasenversatz δt1 ist kleiner als die Hälfte der ersten Periode. Meist liegt der erste Phasenversatz δt1 im Bereich von etwa einem Sechstel der ersten Periode. In jedem Fall ist der erste Phasenversatz δt1 jedoch derart bestimmt, dass zwischen je zwei Pegelwechseln des ersten Signalverlaufs Sa genau ein Pegelwechsel des zweiten Signalverlaufs Sb liegt und damit auch zwischen je zwei Pegelwechseln des zweiten Signalverlaufs Sb genau ein Pegelwechsel des ersten Signalverlaufs Sa liegt.

Der dritte binäre Signalverlauf Sc weist eine zweite Periode auf. Die zweite Periode ist gemäß FIG 3 gleich der ersten Periode. Auch im Falle von FIG 3 ist die zweite Periode also ein ganzzahliges Vielfaches der ersten Periode. Die zugehörige ganze Zahl weist jedoch fix den Wert 1 auf. Weiterhin ist der dritte binäre Signalverlauf Sc gleichartig zum ersten binären Signalverlauf Sa. Er ist jedoch gegenüber dem ersten binären Signalverlauf Sa um einen zweiten Phasenversatz δt2 phasenversetzt. Der zweite Phasenversatz δt2 ist ebenfalls kleiner als die Hälfte der ersten Periode, weist aber einen vom ersten Phasenversatz δt1 verschiedenen Wert auf. Meist liegt der zweite Phasenversatz δt2 im Bereich von etwa einem Drittel der ersten Periode. In jedem Fall ist der zweite Phasenversatz δt2 jedoch derart bestimmt, dass zwischen je zwei Pegelwechseln des ersten Signalverlaufs Sa genau ein Pegelwechsel des dritten Signalverlaufs Sc liegt und damit auch zwischen je zwei Pegelwechseln des dritten Signalverlaufs Sc genau ein Pegelwechsel des ersten Signalverlaufs Sa liegt. Gleiches gilt bezüglich der zeitlichen Abfolge der Pegelwechsel des zweiten Signalverlaufs Sb und des dritten Signalverlaufs Sc.

Im Ergebnis kann die Steuereinrichtung 5 somit - ebenso wie zuvor - anhand des übermittelten ersten und zweiten binären Signalverlaufs Sa, Sb die Lage und/oder die Drehzahl des Rotors 3 (nach Betrag und Vorzeichen) ermitteln. Der dritte binäre Signalverlauf Sc ist nicht zwingend erforderlich, verbessert jedoch die Winkelauflösung.

Auch ein derartiger Betrieb der Gebereinrichtung 8 ist Fachleuten allgemein bekannt. In diesem Fall arbeitet die Gebereinrichtung 8 als sogenannter Hallgeber.

Zusätzlich zum Normalbetrieb kann die Gebereinrichtung 8 auch in einem Sonderbetrieb betrieben werden. Im Sonderbetrieb übermittelt die Gebereinrichtung 8 über die dritte Signalleitung 9c Daten D an die Steuereinrichtung 5. Die Daten D sind - siehe FIG 1 - in der Gebereinrichtung 8 gespeichert. Die Daten D sind von der aktuellen Lage und der aktuellen Drehzahl des Rotors 3 unabhängig.

Die Daten D können prinzipiell beliebiger Natur sein. Beispielsweise kann es sich im Falle eines Inkrementalgebers um den Wert der Drehstellung des Rotors 3 handeln, bei dem im Normalbetrieb über die dritte Signalleitung 9c der Synchronisationspuls übermittelt wird. Auch kann es sich um Betriebsparameter der Gebereinrichtung 8 und/oder des Antriebs 1 handeln. Ein Beispiel eines Betriebsparameters der Gebereinrichtung 8 ist im Falle eines Inkrementalgebers die Strichzahl n bzw. im Falle eines Hallgebers die Polpaarzahl p. Beispiele von Betriebsparametern des Antriebs 1 können statische Angaben wie beispielsweise die Nennleistung, die Nenndrehzahl oder das maximale Drehmoment und dynamische Angaben wie beispielsweise die insgesamt aufgelaufene Anzahl von Betriebsstunden oder die aktuelle Betriebstemperatur sein. Es kann sich auch um Daten handeln, die zuvor von der Steuereinrichtung 5 an die Gebereinrichtung 8 übermittelt wurden, sei es über die dritte Signalleitung 9c, sei es über eine der beiden anderen Signalleitungen 9a, 9b, sei es auf andere Art und Weise.

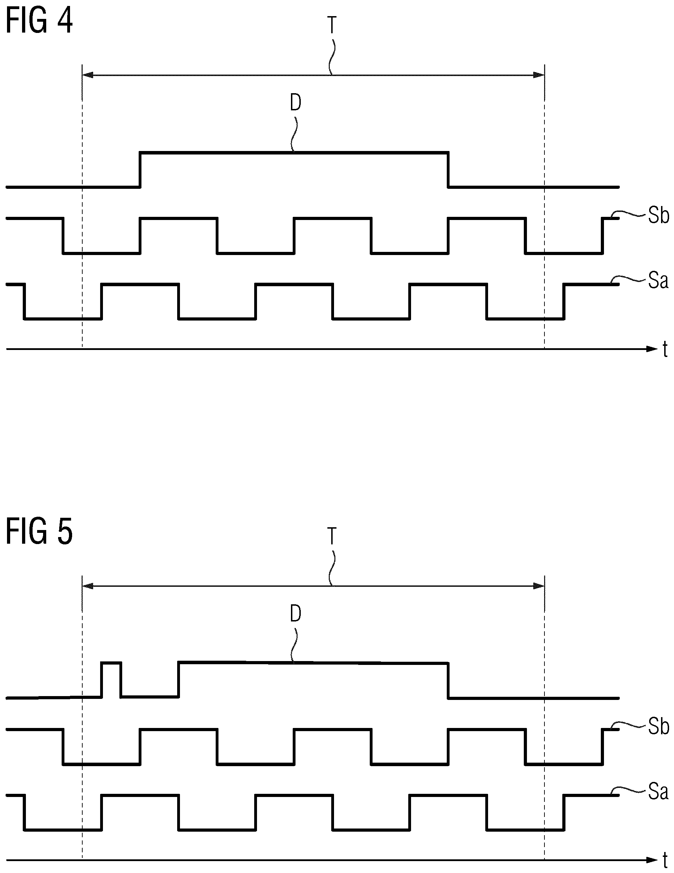

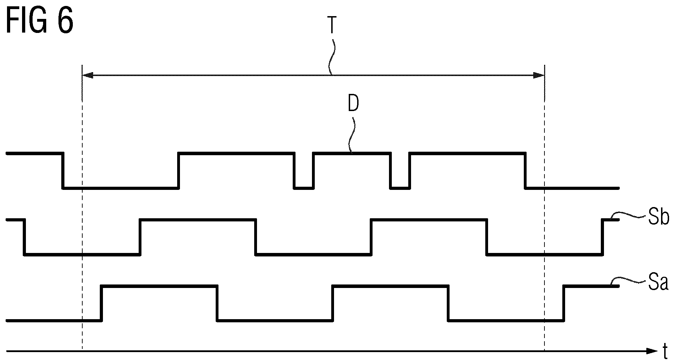

Der Sonderbetrieb ist sowohl ausgehend von der Ausgestaltung gemäß FIG 2 als auch ausgehend von der Ausgestaltung gemäß FIG 3 möglich. Nachstehend werden zunächst in Verbindung mit den FIG 4 und 5 mögliche Ausgestaltungen des Sonderbetriebs für den Fall eines Inkrementalgebers (Normalbetrieb gemäß FIG 2) und danach in Verbindung mit den FIG 6 bis 8 mögliche Ausgestaltungen des Sonderbetriebs für den Fall eines Hallgebers (Normalbetrieb gemäß FIG 3) erläutert.

Gemäß FIG 4 übermittelt die Gebereinrichtung 8 über die dritte Signalleitung 9c die Daten D an die Steuereinrichtung 5. Die Übermittlung der Daten D ist in FIG 4 als einzelner Block angedeutet. Dies soll jedoch nicht bedeuten, dass nur ein einzelnes Bit übertragen wird. Vielmehr soll der Block ein ganzes Datenpaket symbolisieren.

Die Übertragung der Daten D verdrängt die Übermittlung des dritten Signalverlaufs Sc als solchen. Im Gegensatz zum Normalbetrieb wird also im Sonderbetrieb gemäß FIG 4 über die dritte Signalleitung 9c nicht von Zeit zu Zeit (meist einmal pro Umdrehung des Rotors 3) der Synchronisationspuls ausgegeben. Vielmehr werden - soweit erforderlich, auch über mehrere Umdrehungen des Rotors 3 hinweg - ausschließlich die Daten D übermittelt.

Die erste und die zweite Signalleitung 9a, 9b werden im Rahmen der Ausgestaltung gemäß FIG 4 für die Übertragung der Daten D nicht genutzt. Über die erste und die zweite Signalleitung 9a, 9b kann die Gebereinrichtung 8 daher - ebenso wie im Normalbetrieb der Gebereinrichtung 8 - weiterhin den ersten und den zweiten binären Signalverlauf Sa, Sb an die Steuereinrichtung 5 übermitteln. Dies ist bevorzugt, aber nicht zwingend erforderlich.

Gemäß FIG 5 übermittelt die Gebereinrichtung 8 über die dritte Signalleitung 9c ebenfalls die Daten D an die Steuereinrichtung 5. Die Übermittlung der Daten D - auch in FIG 5 angedeutet als einzelner Block - verdrängt die Übermittlung des dritten Signalverlaufs Sc als solchen jedoch nicht. Ebenso wie im Normalbetrieb wird also im Sonderbetrieb gemäß FIG 5 über die dritte Signalleitung 9c weiterhin von Zeit zu Zeit - meist einmal pro Umdrehung des Rotors 3 - der Synchronisationspuls an die Steuereinrichtung 5 übermittelt. Die Übermittlung der Daten D erfolgt im Falle der Ausgestaltung gemäß FIG 5 somit in den Pausen zwischen aufeinanderfolgenden Pegelwechseln des dritten binären Signalverlaufs Sc.

Dies ist relativ einfach möglich, weil der über die dritte Signalleitung 9c übertragene Synchronisationspuls in der Regel relativ kurz ist (der Wechsel des Pegels von 1 auf 0 also bereits kurz nach dem Wechsel des Pegels von 0 auf 1 erfolgt) und damit in Verbindung mit einer Drehzahl des Rotors 3 ohne weiteres eine Zeitspanne ermittelt werden kann, während derer mit Sicherheit kein Synchronisationspuls auftritt. Während dieser Zeitspanne - gegebenenfalls in mehreren derartigen Zeitspannen - können die Daten D übertragen werden. Zur Ermittlung der Dauer der Zeitspanne kann entweder eine maximal mögliche Drehzahl des Rotors 3 oder eine aktuelle Drehzahl des Rotors 3 herangezogen werden. Die aktuelle Drehzahl des Rotors 3 kann anhand der Abfolge der Pegelwechsel des ersten und des zweiten Signalverlaufs Sa, Sb ohne weiteres ermittelt werden. Aufgrund des Umstands, dass die zweite Periode größer als die erste Periode ist, ist weiterhin die für die Übertragung der Daten D zur Verfügung stehende Zeitspanne hinreichend groß.

Auch im Rahmen der Ausgestaltung gemäß FIG 5 kann die Gebereinrichtung 8 somit - ebenso wie im Normalbetrieb der Gebereinrichtung 8 - weiterhin den ersten und den zweiten binären Signalverlauf Sa, Sb an die Steuereinrichtung 5 übermitteln.

Auch gemäß FIG 6 übermittelt die Gebereinrichtung 8 über die dritte Signalleitung 9c die Daten D an die Steuereinrichtung 5. Die Übermittlung der Daten D - wieder angedeutet als einzelner Block - verdrängt die Übermittlung des dritten Signalverlaufs Sc als solchen jedoch nicht. Ebenso wie im Normalbetrieb werden also im Sonderbetrieb gemäß FIG 6 über die dritte Signalleitung 9c weiterhin die entsprechenden Pegelwechsel an die Steuereinrichtung 5 übermittelt. Die Übermittlung der Daten D erfolgt im Falle der Ausgestaltung gemäß FIG 6 somit in den Pausen zwischen aufeinanderfolgenden Pegelwechseln des dritten binären Signalverlaufs Sc. Diese Ausgestaltung ist zwar nicht bevorzugt. Sie ist jedoch möglich.

Die erste und die zweite Signalleitung 9a, 9b werden im Rahmen der Ausgestaltung gemäß FIG 6 für die Datenübertragung nicht genutzt. Über die erste und die zweite Signalleitung 9a, 9b kann die Gebereinrichtung 8 daher - ebenso wie im Normalbetrieb der Gebereinrichtung 8 - weiterhin den ersten und den zweiten binären Signalverlauf Sa, Sb an die Steuereinrichtung 5 übermitteln.

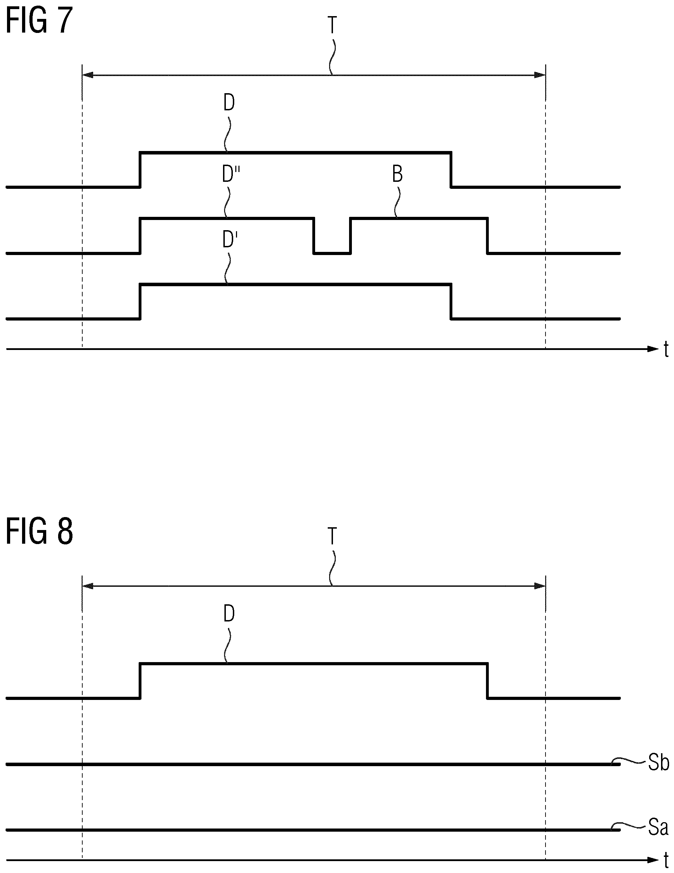

Gemäß FIG 7 übermittelt die Gebereinrichtung 8 über die dritte Signalleitung 9c ebenfalls die Daten D an die Steuereinrichtung 5. Ebenso wie bei FIG 4 verdrängt die Übermittlung der Daten D bei der Ausgestaltung gemäß FIG 7 jedoch die Übermittlung des dritten Signalverlaufs Sc. Es erfolgt also keine periodische Übermittlung von Pegelwechseln des dritten Signalverlaufs Sc. Vielmehr werden - soweit erforderlich, auch über mehrere Umdrehungen des Rotors 3 hinweg - ausschließlich die Daten D übermittelt.

Über die erste und die zweite Signalleitung 9a, 9b kann die Gebereinrichtung 8 im Falle der Ausgestaltung gemäß FIG 7 - ebenso wie bei der Ausgestaltung gemäß FIG 6 - weiterhin den ersten und den zweiten binären Signalverlauf Sa, Sb an die Steuereinrichtung 5 übermitteln. Alternativ kann die Gebereinrichtung 8 entsprechend der Darstellung in FIG 7 jedoch auch über die erste und/oder die zweite Signalleitung 9a, 9b anstelle des ersten und/oder zweiten binären Signalverlaufs Sa, Sb weitere Daten D' an die Steuereinrichtung 5 übermitteln. Auch die weiteren Daten D' sind von der aktuellen Lage und der aktuellen Drehzahl des Rotors 3 unabhängig und in der Gebereinrichtung 8 gespeichert. Auch ist es möglich, dass die Gebereinrichtung 8 Daten D" und/oder Befehle B entgegennimmt, welche von der Steuereinrichtung 5 über die erste und/oder die zweite Signalleitung 9a, 9b an die Gebereinrichtung 8 gesendet werden. Konkret ist in FIG 7 dargestellt, dass die Gebereinrichtung 8 über die erste Signalleitung 9a - wieder angedeutet als einzelner Block - die weiteren Daten D' an die Steuereinrichtung 5 übermittelt und über die zweite Signalleitung 9b die von der Steuereinrichtung 5 gesendeten Daten D" und/oder Befehle B - auch hier angedeutet als einzelne Blöcke - entgegennimmt. Dies ist aber nur beispielhaft. Im Falle der Ausgestaltung gemäß FIG 7 erfolgt die Übermittlung der weiteren Daten D', der Daten D" und/oder der Befehle B in der Regel anstelle der Übermittlung des ersten und/oder zweiten binären Signalverlaufs Sa, Sb. Sie wäre gegebenenfalls aber auch zusätzlich zur Übermittlung des jeweiligen binären Signalverlaufs Sa und/oder Sb möglich.

Weiterhin ist es entsprechend der Darstellung in FIG 8 möglich, dass die Gebereinrichtung 8 im Sonderbetrieb der Gebereinrichtung 8 über die erste und die zweite Signalleitung 9a, 9b weder Signalverläufe noch Daten an die Steuereinrichtung 5 übermittelt noch von der Steuereinrichtung 5 gesendete Daten und/oder Befehle entgegennimmt. In diesem Fall wird im Sonderbetrieb der Gebereinrichtung 8 ausschließlich die dritte Signalleitung 9c genutzt, und zwar ausschließlich zur Übertragung der Daten D.

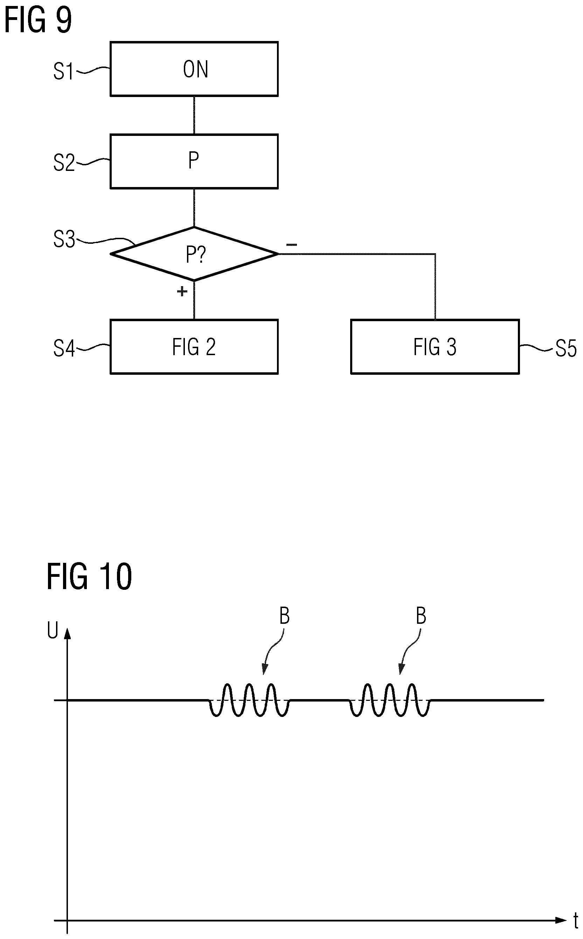

In vielen Fällen wird durch die Ausgestaltung bzw. Programmierung der Gebereinrichtung 8 festgelegt sein, ob sie im Normalbetrieb gemäß FIG 2 und damit im Sonderbetrieb gemäß FIG 3 oder FIG 4 arbeitet oder ob sie im Normalbetrieb gemäß FIG 3 und damit im Sonderbetrieb gemäß FIG 6, FIG 7 oder FIG 8 arbeitet. Alternativ ist es möglich, eine Vorgehensweise zu realisieren, wie sie nachstehend in Verbindung mit FIG 9 erläutert wird.

Gemäß FIG 9 wird in einem Schritt S1 eine elektrische Energieversorgung an die Gebereinrichtung 8 angeschaltet. In einem Schritt S2 liest die Gebereinrichtung 8 aus einem internen Speicher (nicht dargestellt) eine Parametrierung P aus. Die Parametrierung P ist also in der Gebereinrichtung 8 hinterlegt. In einem Schritt S3 überprüft die Gebereinrichtung 8 die Parametrierung P. Je nach Ergebnis der Überprüfung geht die Gebereinrichtung 8 zu einem Schritt S4 oder zu einem Schritt S5 über. Im Schritt S4 arbeitet die Gebereinrichtung 8 im Normalbetrieb gemäß FIG 2 und damit im Sonderbetrieb gemäß FIG 4 oder FIG 5. Im Schritt S5 arbeitet die Gebereinrichtung 8 im Normalbetrieb gemäß FIG 3 und damit im Sonderbetrieb gemäß FIG 6, FIG 7 oder FIG 8. Im Ergebnis entscheidet die Gebereinrichtung 8 somit anhand der Parametrierung P, welches Betriebsverfahren sie konkret realisiert.

Es ist möglich, dass der Gebereinrichtung 8 nach dem Zuschalten der elektrischen Energieversorgung (siehe beispielsweise in FIG 9 den Schritt S1) von der Steuereinrichtung 5 explizit vorgegeben werden muss, ob sie den Normalbetrieb oder den Sonderbetrieb annimmt. Vorzugsweise ist durch die Ausbildung und/oder Programmierung der Gebereinrichtung 8 jedoch entweder festgelegt, dass sie beim Einschalten zunächst den Normalbetrieb annimmt, oder es ist festgelegt, dass sie beim Einschalten zunächst den Sonderbetrieb annimmt. In manchen Fällen kann die eine Festlegung von Vorteil sein, in anderen Fällen die andere Festlegung. In jedem Fall aber befindet sich die Gebereinrichtung 8 aufgrund der zuletzt erläuterten Vorgehensweise nach dem Zuschalten der elektrischen Energieversorgung definiert in einer der beiden Betriebsarten.

Unabhängig davon, ob die Gebereinrichtung 8 nach dem Zuschalten der elektrischen Energieversorgung den Normalbetrieb oder den Sonderbetrieb annimmt, muss es jedoch möglich sein, die Betriebsart der Gebereinrichtung 8 umzuschalten. Zum Umschalten der Gebereinrichtung 8 zwischen dem Normalbetrieb und dem Sonderbetrieb sind verschiedene Vorgehensweisen möglich. Nachstehend werden zwei mögliche Vorgehensweisen erläutert.

In der Regel wird die Gebereinrichtung 8 entsprechend der Darstellung in FIG 1 von der Steuereinrichtung 5 über Versorgungsleitungen 10 mit elektrischer Energie versorgt. Die Gebereinrichtung 8 nimmt somit über die Versorgungsleitungen 10 eine elektrische Versorgungsspannung U entgegen. Es ist entsprechend der Darstellung in FIG 10 möglich, dass die Steuereinrichtung 5 bei Bedarf der Versorgungsspannung U Befehle B überlagert und dadurch die Befehle B an die Gebereinrichtung 8 übermittelt. In diesem Fall kann die Gebereinrichtung 8 in Abhängigkeit von den Befehlen B entscheiden, ob sie den Normalbetrieb oder den Sonderbetrieb annimmt. Diese Vorgehensweise ist unabhängig davon realisierbar, ob die Gebereinrichtung 8 im Normalbetrieb gemäß FIG 2 oder gemäß FIG 3 arbeitet.

Alternativ ist es möglich, dass die Steuereinrichtung 5 die Befehle B über eine der Signalleitungen 9a, 9b, 9c übermittelt. Auch in diesem Fall kann die Gebereinrichtung 8 in Abhängigkeit von den Befehlen B entscheiden, ob sie den Normalbetrieb oder den Sonderbetrieb annimmt. Falls die Gebereinrichtung 8 im Normalbetrieb gemäß FIG 2 arbeitet, erfolgt die Übermittlung der Befehle B vorzugsweise über die dritte Signalleitung 9c, also nicht über die erste Signalleitung 9a oder die zweite Signalleitung 9b. Die Zeitspannen, während derer dies möglich ist, können ohne weiteres ermittelt werden. Falls die Gebereinrichtung 8 im Normalbetrieb gemäß FIG 3 arbeitet, kann die Übermittlung der Befehle B über eine beliebige der Signalleitungen 9a, 9b, 9c erfolgen. Auch hier können die zugehörigen Zeitspannen, während derer dies möglich ist, ohne weiteres ermittelt werden.

Zusammengefasst betrifft die vorliegende Erfindung somit folgenden Sachverhalt:
Eine Gebereinrichtung 8 eines rotatorischen elektrischen Antriebs 1, der einen Stator 2 und einen relativ zum Stator 2 drehbar gelagerten Rotor 3 aufweist, übermittelt in einem Normalbetrieb beim Drehen des Rotors 3 über eine erste Signalleitung 9a einen ersten binären Signalverlauf Sa, über eine zweite Signalleitung 9b einen zweiten binären Signalverlauf Sb und über eine dritte Signalleitung 9c einen dritten binären Signalverlauf Sc an eine Steuereinrichtung 5 des Antriebs 1. Im Normalbetrieb der Gebereinrichtung 8 weisen der erste und der zweite binäre Signalverlauf Sa, Sb über eine Drehung des Rotors 3 um 360° gesehen eine Anzahl an ersten Perioden auf, sind gleichartig und sind um einen ersten Phasenversatz δt1 gegeneinander phasenversetzt, der kleiner als die Hälfte der ersten Periode ist. Dadurch sind von der Steuereinrichtung 5 anhand des übermittelten ersten und zweiten binären Signalverlaufs Sa, Sb die Lage und/oder die Drehzahl des Rotors 3 ermittelbar. Der dritte binäre Signalverlauf Sc weist eine zweite Periode auf, die ein ganzzahliges Vielfaches der ersten Periode ist. In einem Sonderbetrieb übermittelt die Gebereinrichtung 8 über die dritte Signalleitung 9c von der aktuellen Lage und der aktuellen Drehzahl des Rotors 3 unabhängige, in der Gebereinrichtung 8 gespeicherte Daten D an die Steuereinrichtung 5.

Die vorliegende Erfindung weist viele Vorteile auf. Beispielsweise sind gegenüber einer konventionellen, nicht erfindungsgemäßen Gebereinrichtung keinerlei zusätzlichen Schnittstellen erforderlich. Vielmehr werden lediglich die sowieso vorhandenen Signalleitungen 9a, 9b, 9c und gegebenenfalls die ebenfalls sowieso vorhandenen Versorgungsleitungen 10 benötigt. Die Kommunikation ist einfach und robust. Weiterhin ist die erfindungsgemäße Gebereinrichtung 8 abwärtskompatibel. Die Realisierung ist kostengünstig möglich. Es wird keinerlei externe Unterstützung benötigt. Insbesondere bei der Ausgestaltung als Inkrementalgeber (also im Normalbetrieb gemäß FIG 2) können der erste und der zweite binäre Signalverlauf Sa, Sb auch während einer Übertragung der Daten D unbeeinflusst bleiben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Gebereinrichtung (8) eines rotatorischen elektrischen Antriebs (1), der einen Stator (2) und einen relativ zum Stator (2) drehbar gelagerten Rotor (3) aufweist,
- wobei die Gebereinrichtung (8) in einem Normalbetrieb der Gebereinrichtung (8) beim Drehen des Rotors (3) über eine erste Signalleitung (9a) einen ersten binären Signalverlauf (Sa) und über eine zweite Signalleitung (9b) einen zweiten binären Signalverlauf (Sb) an eine Steuereinrichtung (5) des Antriebs (1) übermittelt,
- wobei im Normalbetrieb der Gebereinrichtung (8) der erste und der zweite binäre Signalverlauf (Sa, Sb) über eine Drehung des Rotors (3) um 360° gesehen eine Anzahl an ersten Perioden aufweisen, gleichartig sind und um einen ersten Phasenversatz (δt1) gegeneinander phasenversetzt sind, der kleiner als die Hälfte der ersten Periode ist, so dass von der Steuereinrichtung (5) anhand des übermittelten ersten und zweiten binären Signalverlaufs (Sa, Sb) die Lage und/oder die Drehzahl des Rotors (3) ermittelbar sind,
- wobei die Gebereinrichtung (8) im Normalbetrieb der Gebereinrichtung (8) beim Drehen des Rotors (3) über eine dritte Signalleitung (9c) einen dritten binären Signalverlauf (Sc) an die Steuereinrichtung (5) übermittelt,
- wobei der dritte binäre Signalverlauf (Sc) eine zweite Periode aufweist,
- wobei die zweite Periode ein ganzzahliges Vielfaches der ersten Periode ist,
**dadurch gekennzeichnet,**
**dass** die Gebereinrichtung (8) in einem Sonderbetrieb der Gebereinrichtung (8) über die dritte Signalleitung (9c) von der aktuellen Lage und der aktuellen Drehzahl des Rotors (3) unabhängige, in der Gebereinrichtung (8) gespeicherte Daten (D) an die Steuereinrichtung (5) übermittelt.

2. Betriebsverfahren nach Anspruch 1,
**dadurch gekennzeichnet,**
**dass** die zweite Periode größer als die erste Periode ist und dass die erste Periode 360°/n ist, wobei n eine ganze Zahl größer als 1 ist.

3. Betriebsverfahren nach Anspruch 2,
**dadurch gekennzeichnet,**
**dass** die Gebereinrichtung (8) im Sonderbetrieb der Gebereinrichtung (8) über die erste und die zweite Signalleitung (9a, 9b) ebenso wie im Normalbetrieb den ersten und den zweiten binären Signalverlauf (Sa, Sb) an die Steuereinrichtung (5) übermittelt.

4. Betriebsverfahren nach Anspruch 2 oder 3,
**dadurch gekennzeichnet,**
**dass** die Gebereinrichtung (8) im Sonderbetrieb der Gebereinrichtung (8) über die dritte Signalleitung (9c) entweder weiterhin den dritten binären Signalverlauf (Sc) an die Steuereinrichtung (5) übermittelt und die Übermittlung der Daten (D) in den Pausen zwischen aufeinanderfolgenden Pegelwechseln des dritten binären Signalverlaufs (Sc) erfolgt oder ausschließlich die Daten (D) übermittelt, nicht aber den dritten Signalverlauf (Sc) als solchen.

5. Betriebsverfahren nach Anspruch 1,
**dadurch gekennzeichnet,**
**dass** die zweite Periode gleich der ersten Periode ist, dass die erste Periode 360°/p ist, wobei p eine ganze Zahl ist, und dass der dritte binäre Signalverlauf (Sc) gegenüber dem ersten binären Signalverlauf (Sa) um einen zweiten Phasenversatz (5t2) phasenversetzt ist, der kleiner als die Hälfte der ersten Periode ist und vom ersten Phasenversatz (δt1) verschieden ist.

6. Betriebsverfahren nach Anspruch 5,
**dadurch gekennzeichnet,**
**dass** die Gebereinrichtung (8) im Sonderbetrieb der Gebereinrichtung (8)
- über die erste und die zweite Signalleitung (9a, 9b) ebenso wie im Normalbetrieb den ersten und den zweiten binären Signalverlauf (Sa, Sb) an die Steuereinrichtung (5) übermittelt oder
- über die erste und/oder die zweite Signalleitung (9a, 9b) anstelle des ersten und/oder zweiten binären Signalverlaufs (Sa, Sb) weitere von der aktuellen Lage und der aktuellen Drehzahl des Rotors (3) unabhängige, in der Gebereinrichtung (8) gespeicherte Daten (D') an die Steuereinrichtung (5) übermittelt oder
- über die erste und/oder die zweite Signalleitung (9a, 9b) den ersten und/oder den zweiten binären Signalverlauf (Sa, Sb) nicht an die Steuereinrichtung (5) übermittelt, aber von der Steuereinrichtung (5) gesendete Daten (D") und/oder Befehle (B) entgegennimmt oder
- über die erste und die zweite Signalleitung (9a, 9b) weder Signalverläufe (Sa, Sb) noch Daten (D') an die Steuereinrichtung (5) übermittelt noch von der Steuereinrichtung (5) gesendete Daten (D") und/oder Befehle (B) entgegennimmt.

7. Betriebsverfahren nach Anspruch 5 oder 6,
**dadurch gekennzeichnet,**
**dass** die Gebereinrichtung (8) im Sonderbetrieb der Gebereinrichtung (8) über die dritte Signalleitung (9c) entweder weiterhin den dritten binären Signalverlauf (Sc) an die Steuereinrichtung (5) übermittelt, wobei die Übermittlung der Daten (D) in den Pausen zwischen aufeinanderfolgenden Pegelwechseln des dritten binären Signalverlaufs (Sc) erfolgt, oder ausschließlich die Daten (D) übermittelt, nicht aber den dritten binären Signalverlauf (Sc) als solchen.

8. Betriebsverfahren nach einem der Ansprüche 2 bis 7,
**dadurch gekennzeichnet,**
**dass** die Gebereinrichtung (8) anhand einer in der Gebereinrichtung (8) hinterlegten Parametrierung (P) der Gebereinrichtung (8) entscheidet, ob sie ein Betriebsverfahren nach einem der Ansprüche 2 bis 4 oder ein Betriebsverfahren nach einem der Ansprüche 5 bis 7 realisiert.

9. Betriebsverfahren nach einem der Ansprüche 1 bis 8,
**dadurch gekennzeichnet,**
**dass** die Gebereinrichtung (8) von der Steuereinrichtung (5) über Versorgungsleitungen (10) eine elektrische Versorgungsspannung (U) entgegennimmt und dass die Gebereinrichtung (8) in Abhängigkeit von über die Versorgungsleitungen (10) übermittelten Befehlen (B) entscheidet, ob sie den Normalbetrieb oder den Sonderbetrieb annimmt.

10. Betriebsverfahren nach einem der Ansprüche 1 bis 8,
**dadurch gekennzeichnet,**
**dass** die Gebereinrichtung (8) in Abhängigkeit von von der Steuereinrichtung (5) über eine der Signalleitungen (9a, 9b, 9c) übermittelten Befehlen (B) entscheidet, ob sie den Normalbetrieb oder den Sonderbetrieb annimmt.

11. Betriebsverfahren nach einem der obigen Ansprüche,
**dadurch gekennzeichnet,**
**dass** die Gebereinrichtung (8) beim Einschalten zunächst entweder stets den Normalbetrieb oder stets den Sonderbetrieb annimmt.

12. Gebereinrichtung, die derart ausgebildet oder programmiert ist, dass sie im Betrieb ein Betriebsverfahren nach einem der obigen Ansprüche ausführt.
